# EUROPÄISCHE PATENTSCHRIFT

(11) **EP 0 643 228 B1**
(45) Veröffentlichungstag und Bekanntmachung des Hinweises auf die Patenterteilung: **18.12.1996**
(21) Anmeldenummer: 94114071.7
(22) Anmeldetag: 08.09.1994
(51) Int. Cl.: F16B 4/00, F16B 21/20

(54) **Vorrichtung zur Klemmung einer axial beweglichen Stange**
Device for clamping an axially movable rod
Dispositif pour bloquer une tige axialement mobile

(30) Priorität: 10.09.1993 DE 4330634
(43) Veröffentlichungstag der Anmeldung: 15.03.1995
(73) Patentinhaber: Kostyrka, Peter, D-70195 Stuttgart (DE)
(72) Erfinder: Kostyrka, Peter, D-70195 Stuttgart (DE)
(74) Vertreter: Wilhelm & Dauster Patentanwälte European Patent Attorneys

(56) Entgegenhaltungen:
- US-A- 3 362 733
- US-A- 5 178 480

## Beschreibung

Die Erfindung betrifft eine Vorrichtung zur Klemmung einer axialbeweglichen Stange mit einer Stange und einer die Stange umgebenden Hülse, die einen Bereich mit axial verlaufenden und durch mindestens einen geschlossenen Biegering begrenzten Schlitzen aufweist, der von einem an seinem Außenumfang anliegenden elastischen Mantel eingefaßt ist, der vom Druck eines Fluids beaufschlagbar und zusammen mit den zwischen den Schlitzen verbleibenden Bakken radial zusammendrückbar ist.

Klemmvorrichtungen dieser Art sind bekannt (Prospekt KOSTYRKA pk-"KlemmHülsen", Ausg. 06/88 der Anmelderin). Bei diesen Bauarten wird der Durchmesser der Hülse, die im übrigen von einem fest montierbaren Gehäuse umgeben ist, bei Fluidbeaufschlagung so viel verkleinert, daß die bei fehlender Fluidbeaufschlagung axial bewegliche Stange ausreichend festgeklemmt ist. Konstruktionsbedingt findet bei solchen Klemmvorrichtungen der Klemmvorgang nur unter Fluidbeaufschlagung statt.

Aus der US-A-5 178 480 ist eine auf ähnliche Weise funktionierende Vorrichtung bekannt, wobei jedoch die Hülse ungeschlitzt ist und, demzufolge, ein elastischer Mantel nicht gebraucht wird.

Bekannt sind auch Klemmvorrichtungen (Prospekt SITEMA "Klemmkopf" der Firma Sitema Gesellschaft für Sicherheitstechnik und Maschinenbau mbH, Karlsruhe), bei denen drei oder mehr konisch ausgebildete Klemmbacken unter Federkraft gegen den Stangendurchmesser gedrückt und unter der Axialbelastung der Stange in einem ringförmigen Gehäuse verkeilt werden. Das Lösen der Klemmung erfolgt über hydraulisch betätigte Kolben, welche die Klemmbacken entgegen ihrer Verkeilrichtung axial verschieben und so die zunächst festgehaltene Stange freigeben. Solche Klemmköpfe sind in der Herstellung wegen der notwendigen Einzelteile verhältnismäßig aufwendig, weil besondere axial wirkende Ringkolben vorgesehen werden müssen. Zum anderen tritt während des Klemmvorganges auch noch eine gewisse Axialverschiebung der Stange in der Keilrichtung auf, was nicht immer erwünscht ist.

Der Erfindung liegt die Aufgabe zugrunde, eine Vorrichtung der eingangs genannten Art so auszubilden, daß eine Stangenklemmung ohne Fluidbeaufschlagung eintritt, ohne daß jedoch zusätzliche kompliziert aufgebaute Funktionsteile notwendig werden.

Zur Lösung dieser Aufgabe wird bei einer Vorrichtung der eingangs genannten Art vorgesehen, daß sich auf der dem geschlitzten Bereich abgewandten Seite des Biegeringes ein weiterer mit axialen und zu der zugeordneten Stirnseite der Hülse offenen Schlitzen versehener Bereich anschließt, dessen Innenumfang bei nicht mit Fluiddruck beaufschlagtem Mantel kleiner ist als der Umfang der Stange.

Durch diese Ausgestaltung wirkt die Klemmhülse in der Art eines Doppelhebels und gibt bei Druckbeaufschlagung den als Klemmteil wirkenden geschlitzten Bereich in der Hülse frei, so daß sich die Stange axial bewegen läßt. Dabei wird die elastische Verformung des sich an den ersten und von dem elastischen Mantel umgebenen geschlitzten Bereich anschließenden Biegeringes dazu ausgenützt, die zwischen den Schlitzen des weiteren Bereiches verbleibenden axialen Backen radial nach außen zu verschwenken, so daß dadurch die vom gleichen Biegering ohne Druckbeaufschlagung ausgeübten Klemmkräfte des Klemmbereiches aufgehoben werden. Es hat sich gezeigt, daß bei Wahl entsprechender Materialien, beispielsweise Stahl, schon eine relativ kleine Differenz zwischen dem Innendurchmesser des Klemmbereiches und dem Außendurchmesser der Stange ausreicht, um die erforderlichen Klemmkräfte zu erreichen. Die Klemmhülse gemäß der Erfindung wirkt durch die neue Ausgestaltung in der Art einer Doppelspannzange. Die zu klemmende Stange kann bei der neuen Vorrichtung nur dann in die Klemmhülse eingeführt werden, wenn diese druckbeaufschlagt ist.

Vorteilhafte Weiterbildungen des Erfindungsgedankens sind in den Unteransprüchen gekennzeichnet. So hat es sich als zweckmäßig erwiesen, wenn die Schlitze auch des ersten Bereiches, des Betätigungsbereiches, zu der zugeordneten Stirnseite der Hülse hin offen sind. Es ergibt sich dann eine relativ weiche Ausbildung der Hülse in diesem Betätigungsbereich, die keine allzugroßen Betätigungsdrücke erforderlich macht. Die Ausgestaltung nach Anspruch 3 hat sich als besonders vorteilhaft für eine praktische Ausführungsform erwiesen, wobei sich vier jeweils unter 90° zueinander verlaufende Schlitze als die einfachste Ausführungsform erwiesen haben.

Nach Anspruch 4 kann in dem von dem Mantel umgebenen geschlitzten Bereich im Bereich der offenen Stirnenden der Schlitze ein Anschlagring zugeordnet sein, der mit seinem Außenumfang mit Spiel in einer innen umlaufenden Ausnehmung des geschlitzten Bereiches angeordnet ist. Dieser Anschlagring kann ein zu starkes Zusammendrücken des Betätigungsbereiches und damit unter Umständen eine Beschädigung der neuen Doppelspannhülse vermeiden und bildet so eine Art Sicherheitselement.

Nach Anspruch 5 ist es aber auch möglich, zu beiden Seiten des ersten geschlitzten Bereiches weitere Bereiche mit kleinerem Innenumfang als der Umfang der Stange vorzusehen, die jeweils mit zu der zugeordneten Stirnseite offenen Schlitzen versehen sind. Bei dieser Ausführungsform befindet sich der Betätigungsbereich in der Mitte der gebildeten Spannhülse und es sind zu beiden Seiten des Betätigungsbereiches an der Stange anlegbare Klemmbereiche vorgesehen, die durch Druckbeaufschlagung des Betätigungsbereiches lösbar sind. Zur axialen Befestigung der neuen Klemmhülse kann nach Anspruch 6 ein Biegering des ersten geschlitzten Bereiches mit einem Ringflansch versehen sein, wobei, wie bei allen anderen Ausführungsformen auch, nach Anspruch 7 mindestens dieser erste geschlitzte Bereich von einem Gehäuse umgeben ist, das mit den Anschlüssen der Druckbeaufschlagung versehen ist.

In an sich bekannter Weise kann nach Anspruch 8 der elastische Mantel jeweils im Bereich seiner Stirnseiten mit umlaufenden Dichtringen versehen sein, die zusammen mit dem Gehäuse einen abgedichteten Ringraum zur Druckbeaufschlagung bilden.

Nach Anspruch 9 kann in Weiterbildung der Erfindung der weitere Bereich, der sogenannte Klemmbereich, zum freien Ende der zwischen den Schlitzen gebildeten Backen hin konisch aufgeweitet und in einer konischen Öffnung des Gehäuses angeordnet sein. Diese Ausgestaltung macht sich zusätzlich den durch diese Ausgestaltung erreichbaren Klemmeffekt durch eine eventuelle Axialbewegung der Stange zunutze, wenn der Bereich der konischen Aufweitung entgegengesetzt zu der Stangenbewegung verläuft.

Der Winkel der konischen Aufweitung kann zwischen 12 und 45° betragen. Er liegt damit außerhalb des Selbsthemmungsbereiches. Die Länge der Schlitze im ersten und im weiteren Bereich kann nach Anspruch 11 unterschiedlich sein, so daß bei Druckbeaufschlagung eine Ubersetzung der radialen Verformungswege erreicht wird. Schließlich kann nach Anspruch 12 der Querschnitt des oder der Biegeringe senkrecht zur Achse der Hülse eine größere Abmessung aufweisen als in Richtung der Achse. Der Biegering wirkt bei einer solchen Ausgestaltung besonders vorteilhaft in der Art einer Tellerfeder, deren Verformung zu der radialen Schwenkbewegung der Stege des Klemmbereiches ausgenützt werden kann.

Die Erfindung ist in der Zeichnung anhand von Ausführungsbeispielen dargestellt und wird im folgenden erläutert. Es zeigen:
- Fig. 1: den schematischen Längsschnitt durch eine erfindungsgemäß ausgebildete Klemmvorrichtung in der Position, in der eine in der Klemmvorrichtung befindliche Stange festgesetzt ist,
- Fig. 2: die Stirnansicht der Vorrichtung der Fig. 1,
- Fig. 3: eine schematische Einzeldarstellung der bei der Vorrichtung der Fig. 1 verwendeten, als Doppelspannzange wirkenden Hülse,
- Fig. 4: eine abgewandelte Ausführungsform der Hülse der Fig. 3, bei der der zwischen dem Betätigungs- und dem Klemmbereich befindliche Biegering einen außen abgerundeten Querschnitt aufweist,
- Fig. 5: eine Variante der Hülse der Fig. 3 mit einem rechteckigen Biegering, dessen senkrecht zur Hülsenachse stehende Abmessung größer als die in Richtung der Achse verlaufende Abmessung ist,
- Fig. 6: eine Variante der Hülse der Fig. 3, bei der der Biegering einen trapezförmigen Querschnitt aufweist,
- Fig. 7: eine weitere Variante der Hülse der Fig. 3, mit einem dem Betätigungsbereich zugeordneten inneren Anschlagring,
- Fig. 8: die Stirnansicht der Hülse der Fig. 7 in Richtung VIII,
- Fig. 9: die Stirnansicht der Hülse der Fig. 7 in Richtung IX,
- Fig. 10: eine weitere Variante einer erfindungsgemäßen Klemmvorrichtung mit einer Hülse, deren Klemmbereich konisch nach außen erweitert ist,
- Fig. 11: eine Variante der Hülse der Fig. 3, bei der der Betätigungsbereich aus einem zwischen zwei Ringbereichen verlaufenden geschlitzten Bereich besteht,
- Fig. 12: die Stirnansicht der Hülse der Fig. 11 in Richtung des Pfeiles XII gesehen,
- Fig. 13: die Stirnansicht der Hülse der Fig. 11 in Richtung des Pfeiles XIII gesehen,
- Fig. 14: eine weitere Variante einer erfindungsgemäßen Klemmhülse, bei der ein mittlerer Betätigungsbereich und zwei Klemmbereiche vorgesehen sind, und
- Fig. 15: eine Variante einer Hülse ähnlich Fig. 11, jedoch mit einem stirnseitig vorgesehenen Ringflansch für eine axiale Befestigung.

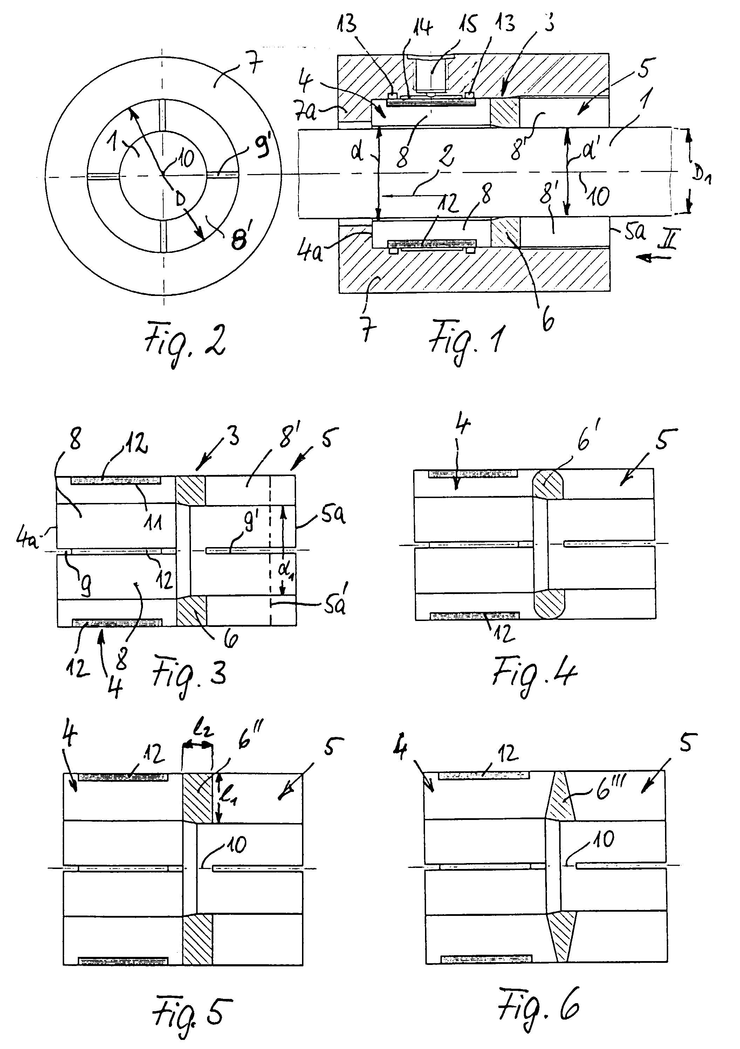

In den Fig. 1 und 2 ist eine Vorrichtung zur Klemmung einer Stange (1) gezeigt, deren Bewegungsrichtung im Sinn des Pfeiles (2) erfolgt. Die Stange kann beispielsweise Teil einer Vorschubeinrichtung sein, die nur schrittweise bewegt werden soll. Sie kann auch Teil einer Abstützeinrichtung sein, die in einer bestimmten Lage festgehalten werden soll.

Die Stange (1) ist von einer, im einzelnen in Fig. 3 im Längsschnitt gezeigten Hülse (3) umgeben, die aus einem Betätigungsbereich (4) und einem Klemmbereich (5) besteht, die voneinander durch einen Biegering (6) getrennt sind. Die Hülse (3) sitzt in einem etwa topfförmigen Gehäuse (7), und zwar so, daß sie mit der Stirnseite (4a) ihres Betätigungsbereiches (4) an einem nach innen gezogenen Bund (7a) des Gehäuses (7) in der Bewegungsrichtung (2) der Stange (1) angelegt ist.

Der Betätigungsbereich (4) der Hülse (3) ist dabei, wie Fig. 3 zeigt, aus vier Backen (8) gebildet, die jeweils etwa die Form eines Viertelzylinders haben und jeweils gegeneinander durch Schlitze (9) getrennt sind, die in Richtung der Achse (10) verlaufen und beim Ausführungsbeispiel unter 90° zueinander stehen. Die Schlitze (9) gehen bis zur Stirnseite (4a) des Betätigungsbereiches durch, so daß die Backen (8) bei diesem Ausführungsbeispiel vom Biegering (6) einseitig frei abragende Arme bilden. Die Backen (8) besitzen eine umlaufende Aussparung (11), in der ein endloser elastischer Mantel (12), insbesondere aus Kunststoff gehalten ist. Die Fig. 1 zeigt, daß dieser Mantel (12) an einen im Gehäuse (7) gebildeten Ringraum (14) angrenzt, der mit seitlichen umlaufenden Dichtungsringen (13) versehen ist und durch einen radialen Anschluß (15) mit einem Druckfluid, insbesondere mit einer Druckflüssigkeit, beaufschlagbar ist. Der Anschluß (15) kann natürlich auch, wenn dies erforderlich ist, in axialer Richtung vorgesehen sein, wobei dann eine radiale Verbindung zum Druckraum vorgesehen sein muß. Die Figuren 1 und 3 zeigen außerdem, daß die Hülse (3) in ihrer Mitte einen geschlossenen Biegering (6) mit etwa quadratischem Querschnitt aufweist, bis zu dem die Schlitze (9) von der Stirnseite (4a) der Backen (8) ausgehend verlaufen. Die Backen (8) sind daher einteilig mit dem Biegering (6) hergestellt. Auf der von den Backen (8) abgewandten Seite des Biegerings (6) befinden sich weitere Backen (8'), die wiederum durch Schlitze (9'), die von der Stirnseite (5a) des Klemmbereiches (5) ausgehen, untereinander getrennt sind. Auch der Klemmbereich (5) besitzt vier in der Art eines Viertelzylinders ausgebildete Backen (8'), die durch unter 90° zueinander versetzte Schlitze (9') voneinander getrennt sind und frei vom Biegering (6) abragende Arme bilden. Die Schlitze (9) und (9'), die jeweils in Richtung der Achse (10) verlaufen, fluchten zueinander.

Der Unterschied zwischen den Backen (8) und (8'), die beide den gleichen Außendurchmesser (D) aufweisen, besteht neben der am Außenumfang der Backen (8) angeordneten Ausnehmung (11) darin, daß der Innendurchmesser (d') im Klemmbereich (5) kleiner ist als der Innendurchmesser (d) der Backen (8) und, was aus Fig. 1 nicht ohne weiteres erkennbar ist, bei fehlender Druckbeaufschlagung am Mantel (12) auch kleiner ist als der Durchmesser (D1) der Stange (1). Der aus Fig. 3 ersichtliche Durchmesser (d₁) des Bereiches (5) ist daher kleiner als der in Fig. 1 gezeigte, durch Aufweitung entstandene Durchmesser (d') des Bereiches (5). Die Abmessungen sind dabei so gewählt, daß die Stange (1) in der in der Fig. 1 und 2 gezeigten Position, in der der Raum (14) nicht mit Druck beaufschlagt ist, von dem Bereich (5) geklemmt und axial gehalten wird.

Die Länge der Schlitze (9') bzw. die axiale Länge der Backen (8') des Klemmbereiches (5) kann dabei derjenigen der Schlitze (9) bzw. der Backen (8) des Betätigungsabschnittes (4) entsprechen. Wie gestrichelt eingezeichnet ist, kann die Stirnseite (5a') des Klemmbereiches (5) auch weiter zum Biegering (6) nach innen versetzt angeordnet sein, so daß sowohl die Schlitze (9') als auch die dazwischenstehenden Backen (8') eine wesentlich kürzere Länge als die Schlitze (9) und die Backen (8) aufweisen. Durch eine solche Maßnahme läßt sich - ebenso wie durch eine längere Ausbildung der Schlitze (9') und der Backen (8') gegenüber den Schlitzen (9) und den Backen (8) - eine Übersetzung sowohl in der Kraftübertragung als auch in der Größe des Betätigungsweges erreichen.

Soll die Klemmung gelöst werden, so wird der Raum (14) mit Druck beaufschlagt. Die Backen (8) werden zusammen mit dem Mantel (12) radial zusammengedrückt, und zwar so weit, daß ihr Innendurchmesser (d) dem Durchmesser (D₁) der Stange (1) gerade noch nicht entspricht. Durch dieses radiale Zusammendrücken des Betätigungsbereiches (4) verformt sich der Biegering (6) elastisch und zwar so, daß die Backen (8') des Klemmbereiches (5) um einen gedachten Schwenkpunkt im Bereich des Biegeringes (6) jeweils radial nach außen geschwenkt werden, so daß dadurch die Klemmung der Stange (1) aufgehoben ist. Es darf dabei darauf hingewiesen werden, daß die Herstellung des Klemmbereiches (5) so erfolgt, daß der Betätigungsbereich (4) der Hülse (3) unter Druckbeaufschlagung des Mantels (12) steht und daß in diesem Zustand der Innendurchmesser (d') auf ein Maß ausgedreht wird, daß etwa 1/100 mm größer als der Durchmesser (D1) der Stange (1) ist. Durch eine solche Maßnahme ist bei fehlender Druckbeaufschlagung dann die Gewähr dafür gegeben, daß der Klemmbereich (5) die Stange (1) radial einklemmt. Durch die neue Ausbildung der Klemmhülse (3) kann daher eine Klemmung der Stange (1) ohne Druckbeaufschlagung ausschließlich durch Radialkräfte erreicht werden. Diese Klemmung wird bei Druckbeaufschlagung aufgehoben. Die Hülse (3) wirkt dabei in der Art einer Spannzange, die an einem Ende zusammengedrückt oder wieder aufgespreizt wird, so daß sich ihr anderes Ende entgegengesetzt verhält. Die Hülse (3) kann aus Stahl hergestellt werden. Es hat sich gezeigt, daß die elastischen Eigenschaften des Biegeringes (6) und die dadurch in ihm speicherbare Energie ausreichen, um die gewünschte Klemmung zu erreichen.

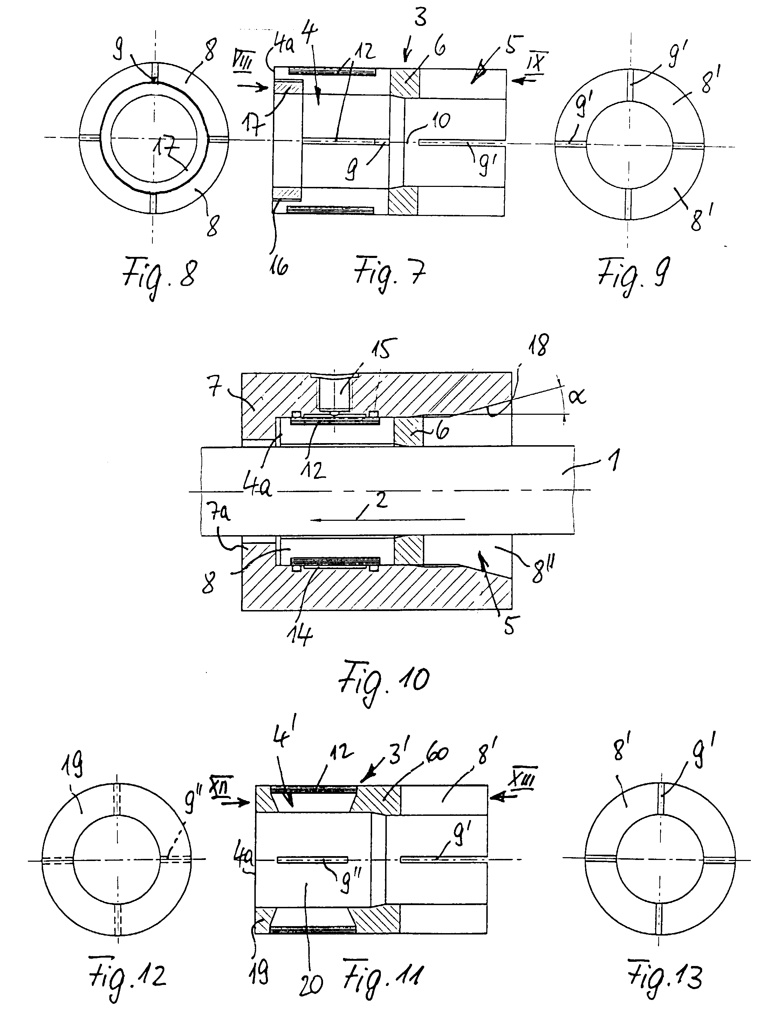

Die Figuren 4 bis 6 zeigen Varianten der Hülse (3), bei denen jeweils ein anderer Querschnitt für den Biegering (6) gewählt wurde. So besitzt der Biegering (6') der Fig. 4 einen außen abgerundeten Querschnitt. Der Biegering (6'') der Ausführungsform der Fig. 5 einen rechteckigen Querschnitt, wobei die Seitenlänge (11) des Rechteckquerschnittes, die senkrecht zu der Hülsenachse (10) verläuft, größer ist als die Seitenlänge (12) des Rechteckes in Richtung der Achse (10). Die Fig. 6 zeigt eine Hülse, bei der der Biegering (6''') einen trapezförmigen Querschnitt aufweist, wobei ebenfalls die Längenabmessung des Querschnittes senkrecht zur Achse (10) der Hülse (3) größer ist als die größere Trapezseite, die etwa in Richtung der Achse (10) verläuft. Auch eine solche trapezförmige Querschnittform hat sich als zur Übertragung der elastischen Kräfte und zur Übertragung der Schwenkbewegungen geeignet erwiesen.

In den Figuren 7 bis 9 ist eine Variante einer Hülse ähnlich der in Fig. 3 gezeigten, dargestellt, bei der dem Betätigungsbereich (4) im Bereich des Stirnendes (4a) eine Ausdrehung (16) zugeordnet ist, in der ein Anschlagring (17) mit seinem Außendurchmesser mit Spiel in der Ausdrehung (16) sitzt. Wie aus der Darstellung der Fig. 7 ohne weiteres deutlich wird, begrenzt der Anschlagring (17) den radialen Weg der vier Backen (8) nach innen. Eine zu starke Deformierung durch einen unbeabsichtigten Überdruck oder auch die Berührung des Stangendurchmessers durch die Innenseite der Backen (8), wird durch diese Maßnahme sicher vermieden.

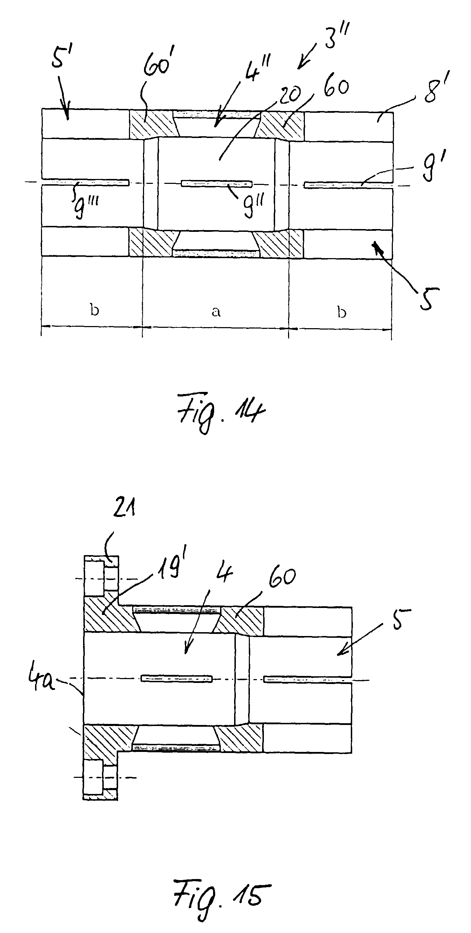

Die Fig. 10 zeigt eine Variante, bei der die Backen (8'') des Klemmbereiches (5) eine konische Erweiterung (18) um den Winkel (α) aufweisen und in eine entsprechende konische Erweiterung des Gehäuses (7) eingefügt sind. Bei dieser Variante liegt die Stirnseite (4a) der Backen (8) nicht an dem Bund (7a) des Gehäuses (7) an. Die axiale Anlage in der Bewegungsrichtung (2) der Stange (1) erfolgt vielmehr durch die konischen Außenflächen im Bereich (18) der Backen (8''). Diese Variante sorgt für eine Verstärkung der Klemmkraft, die auf die Stange (1) ausgeübt wird, wenn diese in ihrer Bewegungsrichtung (2) mit einer Kraft beaufschlagt ist. Da der Winkel (α) der Erweiterung (18) außerhalb der Selbsthemmung liegt, kann ein Lösen der Klemmung wie bei den anderen Ausführungsformen durch Beaufschlagung des Druckraumes (14) erreicht werden.

Die Figuren 11 bis 13 zeigen eine Variante der bisherigen Klemmhülse (3) in sofern als hier eine Hülse (3') vorgesehen ist, deren Betätigungsbereich (4') zwischen einem Biegering (60) und einem an der Stirnseite (4a) vorgesehenen Endring (19) angeordnet ist. Hier verbleiben zwischen den wiederum um 90° zueinander versetzten Schlitzen (9') verformbare, in der Art von Viertelzylindern ausgebildete Backen (20), die aber nicht, wie bei den vorhergehenden Ausführungsbeispielen bis zur Stirnseite (4a) voneinander getrennt sind. Auch bei dieser Ausführungsform läßt sich aber bei Druckbeaufschlagung des elastischen Mantels (12) und der Backen (20) eine Verformung des Biegeringes (60) derart erreichen, daß die analog zu den vorher beschriebenen Klemmhülsen ausgebildeten Backen (8') des Klemmbereiches in der gleichen Weise betätigt werden, wie bei den anderen Ausführungsbeispielen.

Die Fig. 14 zeigt eine weitere Variante der zuletzt beschriebenen Ausführungsform in sofern, als hier beidseitig von dem Betätigungsbereich (4'') Klemmbereiche (5 und 5') gebildet sind, die beim Ausführungsbeispiel jeweils die Länge (b) in Achsrichtung aufweisen, während der Betätigungsbereich (4'') eine etwas größere Länge (a) aufweist. Die Fig. 14 beschreibt daher eine zu der Mittelsenkrechtebene spiegelsymmetrisch aufgebaute Klemmhülse (3''), deren Haltekraft gegenüber den bisher erläuterten Ausführungsformen wegen der Anordnung von zwei Klemmbereichen (5 und 5') höher ausgelegt sein kann.

Die Fig. 15 schließlich zeigt eine Variante, bei der der Betätigungsbereich ähnlich wie in Fig. 11 ausgebildet ist, wobei jedoch der an der Stirnseite (4a) des Betätigungsbereiches (4) gelegene Ring (19') mit einem umlaufenden Ringflansch (21) für eine Axialbefestigung versehen ist. Bei allen Ausführungsformen erfolgt die Auslegung jeweils so, daß in nicht unter Druck stehendem Zustand des Betätigungsbereiches (4) die jeweiligen Klemmbereiche (5) unter elastischer Spannung auf die axial zu haltende Stange drücken.

## Patentansprüche

1. Vorrichtung zur Klemmung einer axialbeweglichen Stange (1), mit einer Stange und einer die Stange umgebenden Hülse (3, 3',3''), die einen Bereich (4) mit axial verlaufenden und durch mindestens einen geschlossenen Biegering (6, 6', 6'', 6''', 60) begrenzten Schlitzen (9, 9', 9'') aufweist, der von einem an seinem Außenumfang anliegenden elastischen Mantel (12) eingefaßt ist, der druckbeaufschlagbar und zusammen mit den zwischen den Schlitzen verbleibenden Backen (8, 20) radial zusammendrückbar ist, dadurch gekennzeichnet, daß sich auf der dem geschlitzen Bereich (4) abgewandten Seite des Biegerings (6, 6', 6'', 6''', 60) ein weiterer mit axialen und zu der zugeordneten Stirnseite der Hülse offenen Schlitzen (9') versehener Bereich (5) anschließt, dessen Innenumfang bei nicht druckbeaufschlagtem Mantel (12) kleiner ist als der Umfang der Stange (1).

2. Vorrichtung nach Anspruch 1, dadurch gekennzeichnet, daß die Schlitze (9) des ersten Bereiches (4) zu der anderen Stirnseite (4a) der Hülse (3) offen sind.

3. Vorrichtung nach den Ansprüchen 1 oder 2, dadurch gekennzeichnet, daß die Schlitze (9, 9') des ersten und zweiten Bereiches (4) bzw. (5) zueinander fluchten.

4. Vorrichtung nach Anspruch 1, dadurch gekennzeichnet, daß dem von dem Mantel (12) umgebenen geschlitzten Bereich (4) im Bereich der offenen Stirnenden der Schlitze (9) ein Anschlagring (17) zugeordnet ist, der mit seinem Außenumfang mit Spiel in einer innen umlaufenden Ausnehmung (16) des geschlitzten Bereiches (4) angeordnet ist.

5. Vorrichtung nach Anspruch 1, dadurch gekennzeichnet, daß zu beiden Seiten des ersten geschlitzten Bereiches (4) weitere Bereiche (5, 5') mit kleinerem Innenumfang als der Umfang der Stange (1) vorgesehen sind, die mit zu der jeweiligen Stirnseite offenen Schlitzen (9', 9''') versehen sind.

6. Vorrichtung nach Anspruch 1, dadurch gekennzeichnet, daß ein Biegering (19') des ersten geschlitzten Bereiches (4) mit einem Ringflansch (21) zur Axialbefestigung versehen ist.

7. Vorrichtung nach einem der Ansprüche 1 bis 6, dadurch gekennzeichnet, daß mindestens der erste geschlitzte Bereich (4, 4'') von einem Gehäuse (7) umgeben ist, das mit den Anschlüssen (15) zur Druckbeaufschlagung versehen ist.

8. Vorrichtung nach Anspruch 7, dadurch gekennzeichnet, daß der elastische Mantel (12) jeweils im Bereich seiner Stirnseiten mit umlaufenden Dichtringen (13) zusammenwirkt, die im Gehäuse (7) angeordnet sind und einen abgedichteten Ringraum (14) zur Druckbeaufschlagung begrenzen.

9. Vorrichtung nach Anspruch 1, dadurch gekennzeichnet, daß der weitere Bereich (5) zum freien Ende der zwischen den Schlitzen gebildeten Backen (8'') konisch aufgeweitet und in einer konischen Öffnung des Gehäuses (7) angeordnet ist.

10. Vorrichtung nach Anspruch 9, dadurch gekennzeichnet, daß der Winkel (α) der konischen Aufweitung (18) zwischen 12 und 45° beträgt.

11. Vorrichtung nach Anspruch 1, dadurch gekennzeichnet, daß die Länge (a, b) der Schlitze (9, 9', 9'') im ersten und im weiteren Bereich (4, 4'', 5) unterschiedlich ist.

12. Vorrichtung nach Anspruch 1, dadurch gekennzeichnet, daß der Querschnitt des Biegeringes (6'', 6''') senkrecht zur Achse (10) der Hülse (3) eine größere Abmessung als in Richtung der Achse aufweist.

## Claims

1. A device for clamping an axially movable bar (1) comprising a bar and, surrounding the bar, a sleeve (3, 3', 3") comprising a region (4) with axially extending slots (9, 9', 9") bounded by at least one closed flexural ring (6, 6', 6", 6‴, 60) which is framed by an elastic shell (12) bearing on its outer periphery and which is adapted to be subjected to pressure and which can be radially compressed together with the jaws (8, 20) remaining between the slots, characterised in that adjacent to that side of the flexural ring (6, 6', 6", 6‴, 60) which is remote from the slotted region (4) there is a further region (5) provided with axial slots (9') open towards the associated end face of the sleeve and of which, when the shell (12) is not subjected to pressure, the inner periphery is smaller than the circumference of the bar (1).

2. A device according to Claim 1, characterised in that the slots (9) in the first region (4) are open towards the other end face (4a) of the sleeve (3).

3. A device according to Claims 1 or 2, characterised in that the slots (9, 9') of the first and second regions (4, 5) are aligned with one another.

4. A device according to Claim 1, characterised in that associated with the slotted region (4) enclosed by the shell (12) there is in the region of the open ends of the slots (9) an abutment ring (17) the outer periphery of which is disposed with clearance in an internally encircling recess (16) in the slotted region (4).

5. A device according to Claim 1, characterised in that on both sides of the first slotted region (4) there are further regions (5, 5') of smaller inner periphery than the circumference of the bar (1) and which are provided with slots (9', 9‴) which are open towards the respective end.

6. A device according to Claim 1, characterised in that a flexural ring (19') of the first slotted region (4) is provided with an annular flange (21) for axial fixing.

7. A device according to one of Claims 1 to 6, characterised in that at least the first slotted region (4, 4") is enclosed by a housing (7) which is provided with connections (15) for the application of pressure.

8. A device according to Claim 7, characterised in that the end faces of the elastic shell (12) cooperate with encircling sealing rings (13) which are disposed in the housing (7) and define a sealed annular space (14) for the application of pressure.

9. A device according to Claim 1, characterised in that the further region (5) widens out conically towards the free end of the jaws (8") formed between the slots and is disposed in a conical opening in the housing (7).

10. A device according to Claim 9, characterised in that the angle (α) of the conical widening (18) is between 12 and 45°.

11. A device according to Claim 1, characterised in that the length (a, b) of the slots (9, 9', 9") in the first and in the further region (4, 4", 5) is different.

12. A device according to Claim 1, characterised in that the cross-section of the flexural ring (6", 6‴) at right-angles to the axis (10) of the sleeve (3) is of a greater dimension that in the direction of the axis.

## Revendications

1. Dispositif de blocage d'une tige axialement mobile (1) présentant une tige et une douille (3, 3', 3'') entourant la tige, la douille comprenant une zone (4) s'étendant axialement limitée par un anneau cintré fermé (6, 6', 6", 6‴, 60) et des fentes (9, 9', 9"), qui est revêtue sur sa circonférence extérieure par un manchon élastique (12) pouvant être pressé avec les joues (8, 20) subsistant entre les fentes,
caractérisé en ce qu'à partir de la zone fendue (4) du côté opposé à l'anneau (6, 6', 6", 6‴, 60) s'étend une zone de prolongement (5) axial de la face frontale de la douille avec des fentes ouvertes (9') dont la circonférence intérieure non recouverte par le manchon est plus petite que la circonférence de la tige (1).

2. Dispositif selon la revendication 1, caractérisé en ce que les fentes (9) de la première zone (4) sont ouvertes du côté de la face frontale (4a) de la douille (3).

3. Dispositif selon la revendication 1 ou 2, caractérisé en ce que les fentes (9, 9') des première et seconde zones (4, 5) sont alignées l'une avec l'autre.

4. Dispositif selon la revendication 1, caractérisé en ce qu'un anneau de butée (17) est disposé dans le manchon (12) entourant la zone (4), dans la zone de la face frontale ouverte de la fente (9), sa périphérie étant montée avec jeu dans un alvéole interne circulaire (16) de la région fendue (4).

5. Dispositif selon la revendication 1, caractérisé en ce que des deux côtés de la première zone fendue (4) sont prévues des zones de prolongement (5, 5') avec une circonférence interne plus petite que la circonférence de la tige (1) qui dans leurs côtés respectifs présentent des fentes ouvertes (9', 9''').

6. Dispositif selon la revendication 1, caractérisé en ce qu'est prévu, dans la première zone (4) un anneau cintré (19') avec une bride annulaire (21) de fixation axiale.

7. Dispositif selon l'une des revendications 1 à 6, caractérisé en ce qu'un logement (7) entoure la première zone fendue (4', 4"), avec un orifice (15) permettant d'appliquer la pression.

8. Dispositif selon la revendication 7, caractérisé en ce que le manteau élastique (12) coopère dans la région de ses faces frontales avec des joints toriques (13) d'étanchéité montés dans le logement (7) et limités par une chambre annulaire (14) pour l'application de la pression.

9. Dispositif selon la revendication 1, caractérisé en ce que la zone de prolongement (5) est de forme conique à son extrémité libre entre les fentes de la joue (8") et est disposée dans une ouverture conique du logement (7).

10. Dispositif selon la revendication 9, caractérisé en ce que l'angle (α) de l'évasement conique (18) est compris entre 12 et 45°.

11. Dispositif selon la revendication 1, caractérisé en ce que la longueur (a, b) des fentes (9, 9', 9") dans la première et dans les zones suivantes (4, 4", 5) est différente.

12. Dispositif selon la revendication 1, caractérisé en ce que la section transversale des anneaux cintrés (6', 6‴) perpendiculairement à l'axe (10) de la douille (3) est de mesure supérieure à la section en direction de l'axe.
